(19) Europäisches Patentamt
European Patent Office
Office européen des brevets

(11) **EP 4 467 329 A1**

(12) # EUROPEAN PATENT APPLICATION

(43) Date of publication:
**27.11.2024  Bulletin 2024/48**

(21) Application number: **24178058.4**

(22) Date of filing: **24.05.2024**

(51) International Patent Classification (IPC):
**B29C 70/44** (2006.01)   **B29C 70/34** (2006.01)
**B29C 70/08** (2006.01)   **B29C 70/48** (2006.01)
**B29C 43/12** (2006.01)   **B29C 37/00** (2006.01)
**B29C 43/36** (2006.01)

(52) Cooperative Patent Classification (CPC):
**B29C 37/0064; B29C 43/12; B29C 43/3642;
B29C 70/086; B29C 70/342; B29C 70/44;
B29C 70/443; B29C 70/48**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **25.05.2023  US 202318323586**

(71) Applicant: **Rohr, Inc.**
**Chula Vista, CA 91910-2098 (US)**

(72) Inventor: **THAI, Bryan**
**Poway (US)**

(74) Representative: **Dehns**
**10 Old Bailey**
**London EC4M 7NG (GB)**

(54) **PERMEABLE CLOSED-MOLD OUT-OF-AUTOCLAVE COMPOSITE PART MANUFACTURING**

(57)     A system (100; 300) for manufacturing a composite component is disclosed herein. The system (100; 300) includes a mold (102; 302) defining an interior space and having a conduit (108, 110; 312, 314) through the mold (102; 302) and into the interior space, a prepreg part (104; 304) configured to fit in the interior space, and a permeable media (106; 306) configured to fit in the interior space and around the prepreg part (104; 304), wherein a vacuum is applied to the interior space through the conduit (108, 110; 312, 314) to extract volatiles (204) from the prepreg part (104; 304), through the permeable media (106; 306), and out the conduit (108, 110; 312, 314).

500

| | |
|---|---|
| Place prepreg part in the mold | 502 |
| Place permeable media around the prepreg part | 504 |
| Insert pressurized film over prepreg part | 506 |
| Close the mold | 508 |
| Apply a vacuum to the mold | 510 |
| Apply compressed air to the mold | 512 |
| Cure the part under hydrostatic pressure | 514 |

FIG. 5

EP 4 467 329 A1

**Description**

FIELD

The present disclosure generally relates composite part manufacturing, and more particularly, to closed mold composite part manufacturing.

BACKGROUND

Resin pressurized molding (RPM) processes such as same qualified resin transfer molding (SQRTM) are used to manufacture composite parts. Such processes may use a material that is pre-impregnated with a resin. However, various resins include materials that may outgas during the curing process which is not suitable with current RPM and SQRTM processes. Volatiles include anything that may produce off gassing such as benzene, hexane, solvents, and/or materials that convert to gas at room temperature. Other materials produce outgas at high temperatures, including moisture in the resin. The off gassing of volatiles during the curing process tends to create porosity, voids, delamination, and may delaminated, inflated, or bubbled during post cure panels that compromises the composite part.

SUMMARY

Disclosed herein is a system for manufacturing a composite component. The system includes a mold defining an interior space and having a conduit through the mold and into the interior space, a prepreg part configured to fit in the interior space, and a permeable media configured to fit in the interior space and around the prepreg part, wherein a vacuum is applied to the interior space through the conduit to extract volatiles from the prepreg part, through the permeable media, and out the conduit.

In various embodiments, the prepreg part includes a plurality of fibers and a resin, the plurality of fibers being impregnated by the resin. In various embodiments, the plurality of fibers include at least one of a carbon fiber, a fiber glass, or a polyaramid fiber. In various embodiments, the resin includes a thermoset, a thermoplastic, an elastomer rubber, a bismaleimide (BMI), a thermoplastic, a liquid rubbers, an epoxy resin, a phenolic resin, or a polymer. In various embodiments, the resin has a first flow rate through the permeable media in response to the vacuum and the volatiles has a second flow rate through the permeable media in response to the vacuum, the second flow rate being greater than the first flow rate.

In various embodiments, the mold is further configured to heat the interior space including the prepreg part while maintaining the vacuum. In various embodiments, the system further includes a compress air source configured to wherein the mold is further configured to apply compressed air to the interior space through the conduit to apply hydrostatic pressure to the prepreg part during a curing process of the prepreg part.

In various embodiments, the system further includes an inlet configured to provide compressed air to the interior space while the conduit applies the vacuum and a pressure film disposed between the inlet and the prepreg part and the pressure film disposed between a top portion of the mold and the prepreg part. In various embodiments, the permeable media includes a high density fiber, a cement, a ceramic, a foam, a wood, or a cork. In various embodiments, the system further includes a resin source coupled to the mold, the resin source configured to inject resin into the prepreg part before performing a curing process.

Also disclosed herein is a method for manufacturing a composite component. The method includes placing a prepreg part into a mold, placing a permeable media in the mold and around the prepreg part, and applying a vacuum to the mold, causing volatiles in vapor form to exit the prepreg part and the mold through the permeable media.

In various embodiments, the method further includes applying heat to the mold and the prepreg part, the heat causing additional volatiles to flow through the permeable media. In various embodiments, the method further includes removing the vacuum from the mold and applying compressed air to the mold and the prepreg part, generating a hydrostatic pressure in the prepreg part. In various embodiments, the method further includes removing the heat from the mold and curing the prepreg part under the hydrostatic pressure.

In various embodiments, the method further includes introducing additional resin to the prepreg part using a resin film or oversaturating the prepreg part before placing the prepreg part in the mold. In various embodiments, the prepreg part includes a plurality of fibers and a resin, the plurality of fibers being impregnated by the resin. In various embodiments, the plurality of fibers include at least one of a carbon fiber, a fiber glass, or a polyaramid fiber. In various embodiments, the resin includes a bismaleimide (BMI), a thermoplastic, a liquid rubbers, an epoxy resin, a phenolic resin, or a polymer.

In various embodiments, the resin has a first flow rate through the permeable media in response to the vacuum and the volatiles have a second flow rate through the permeable media in response to the vacuum, the second flow rate being greater than the first flow rate. In various embodiments, the permeable media, includes a high density fiber glass, a chromatography column, a cement, a ceramic, a foam, a wood, or a cork.

The foregoing features and elements may be combined in any combination, without exclusivity, unless expressly indicated herein otherwise. These features and elements as well as the operation of the disclosed embodiments will become more apparent in light of the following description and accompanying drawings.

BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.

FIGS. 1A and 1B illustrate a system for manufacturing a composite component from a pre-impregnated part, in accordance with various embodiments.

FIG. 2 illustrates a cross section of a pre-impregnated part and a permeable media used to manufacture a composite component, in accordance with various embodiments.

FIGS. 3A and 3B illustrate a system for manufacturing a composite component from a pre-impregnated part, in accordance with various embodiments.

FIG. 4 illustrates a flow diagram of a method of manufacturing a composite part using a resin pressurized molding process, in accordance with various embodiments.

FIG. 5 illustrates a flow diagram of a method of manufacturing a composite part using a resin pressurized molding process, in accordance with various embodiments.

DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. While these exemplary embodiments are described in sufficient detail to enable those skilled in the art to practice the invention, it should be understood that other embodiments may be realized and that logical, chemical and mechanical changes may be made without departing from the spirit and scope of the invention. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

Disclosed herein is a resin pressurized molding (RPM) process that provides an improved out-of-autoclave process. In various embodiments, the RPM process disclosed herein does not use injection resin. In various embodiments, the RPM process disclosed herein may be used for most pre-impregnated ("prepreg") systems (e.g., prepreg compression molding (PCM)). In various embodiments, the out-of-autoclave RPM process disclosed herein may produce composite parts of a higher quality than is possible with conventional autoclave processes. In various embodiments, a prepreg part is placed inside a closed mold and a permeable zone is created around the prepreg part. In various embodiments, a resin film may be added to the mold, providing additional resin for manufacturing to account for resin loss during the manufacturing process. In various embodiments, the prepreg part may be oversaturated (i.e., have a higher resin content) with additional resin prior to being placed in the mold, providing additional resin for manufacturing to account for resin loss during the manufacturing process. In various embodiments, the permeable zone allows volatiles to escape from the resin and be purged through the permeable zone during the out-of-autoclave RPM process. The movement of volatiles from the prepreg part and through the permeable zone may be modeled by Darcy's law. Darcy's law describes the flow of a fluid through a porous medium as a function of permeability, dynamic viscosity of the fluid, and a pressure drop.

In various embodiments, the out-of-autoclave process begins with the prepreg part being placed in a mold, a permeable zone being formed around the prepreg part, and the mold being closed. In various embodiments, the resin is added to the mold and the prepreg part. In various embodiments, the resin is present in the prepreg part before being placed in the mold. In various embodiments, a vacuum is applied to create a pressure drop, or delta pressure, between the prepreg part, the permeable zone, and outside the permeable zone. In various embodiments, the mold is heated so that as the prepreg part increases in temperature, volatiles and/or air bubbles, if any, flow along with the resin in the direction of pressure drop. In various embodiments, the viscosity of the volatiles and the air are much lower than the viscosity of the resin so that the volatiles and the air flow faster than the resin and escape from the resin through the permeable zone. In various embodiments, after removing the air and/or volatiles, compressed air may be applied to provide a hydrostatic pressure on the prepreg part as it is cured in mold.

The out-of-autoclave RPM process disclosed herein provides a cost savings including reducing capital expenditure by removing the autoclave from the RPM process. In various embodiments, the RPM process may allow for net shape parts that use less machining to achieve their final shape. In various embodiments, the closed mold aspect of the RPM process described herein may produce parts that have smoother surfaces and allow for better control of part configurations, including, in various embodiments, part thickness. In various embodiments, the RPM process described herein allows for wider variety of resins to be used in manufacturing the composite parts. In various embodiments, the RPM process allows manufacturing of composite parts having a higher fiber volume by improving the removal of volatiles and off gassing. In various embodiments, the RPM process is applicable with most prepreg systems. In various embodiments, resin injection is not used and where resin injection is used there may be less waste than current processes.

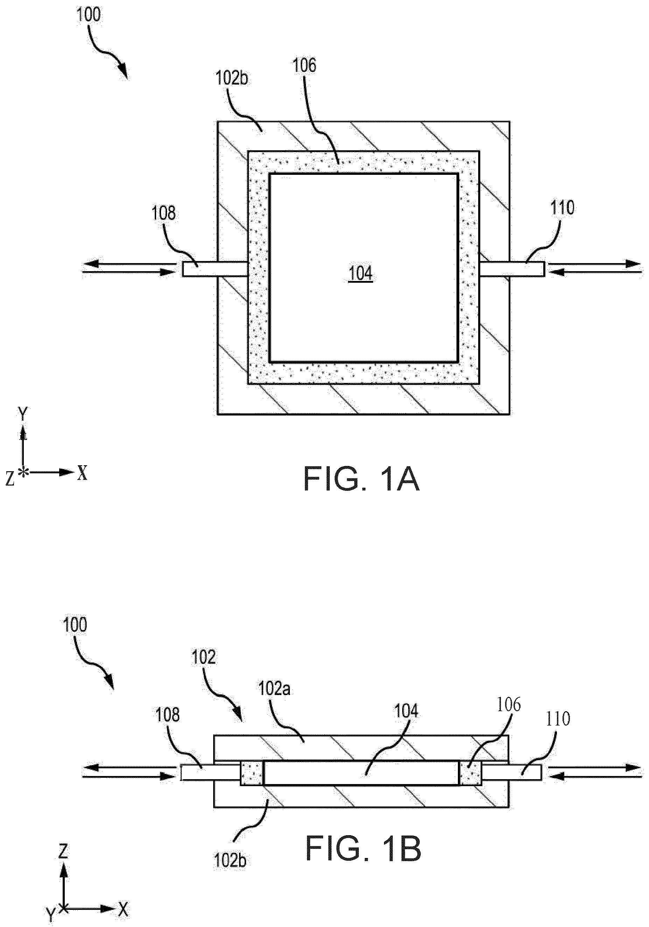

Referring now to FIGS. 1A and 1B, a system 100 for manufacturing a composite part using a resin pressurized molding (RPM) process is illustrated, in accordance with various embodiments. System 100 may be used to manufacture the composite part without the use of an autoclave. System 100 includes a mold 102, a prepreg part 104, a permeable media 106, a first conduit 108, and a second conduit 110. Mold 102 includes a top portion 102a and a bottom portion 102b that close around prepreg part 104 and permeable media 106. Mold 102 defines an interior space between top portion 102a and bottom portion 102b that define a shape and configuration of the final composite part. First conduit 108 and second conduit 110 provide a path for air to enter and exit mold 102. FIG. 1A is a top down view of system 100 without the top portion 102a. FIG. 1B is a cross-section side view of system 100. As will be described in further detail below, prepreg part 104, including a resin, is placed inside mold 102 and permeable media 106 is placed around prepreg part 104. In various embodiments, a vacuum is applied to mold 102. In various embodiments, mold 102 is heated, allowing the resin to flow within prepreg part 104. In various embodiments, prepreg part 104 is cured in mold 102 to form a composite material.

Prepreg part 104 is a composite material including fibers pre-impregnated with a resin or polymer resin. In various embodiments, the fibers may include carbon fiber, fiber glass, polyaramid fibers, or any reinforced fibers, among others. In various embodiments, the resin may be partially cured in prepreg part 104. In various embodiments, the resin may include a thermoset (e.g., a liquid or hotmelt thermoset), a thermoplastic, an elastomeric rubber, bismaleimide (BMI), thermoplastics, liquid rubbers, epoxy resin, phenolic resin, and/or polymers, among others. Typically, the resin has a different viscosity a cold temperatures, room temperature, and warm temperatures. Generally, the resin is less viscous at cold temperature than at room temperature and more viscous at warm temperatures than at room temperatures. In prepreg part 104, the resin is typically partially cured among the fibers of prepreg part 104.

In various embodiments, the fibers of prepreg part 104 may be woven together into matrix to which the resin is bonded. The resin may strengthen and support the fibers and the fibers may strengthen and support the resin, though further processing, as described below, is used to create the composite component from prepreg part 104. Prepreg part 104 may be any shape accommodated by mold 102. It should be appreciated, that while mold 102 and prepreg part 104 are illustrated as being rectangular, both mold 102 and/or prepreg part 104 may be any suitable shape for a composite component, including freeform shapes. This is possible because the RPM process, as described herein, is performed in mold 102 and does not use an auto-clave for curing the resin or composite component. In various embodiments, prepreg part 104 may be larger than the final component to allow for removing material around the edge of prepreg part 104 for a uniform, or smooth edge on the final composite component. In various embodiments, about 0.5 inches to about 2 inches, and more specifically, about 1 inch of material may be removed from the outer edge of prepreg part 104 at the end of the RPM process.

Certain resins include volatiles that cause gasses to be produced within the resin. Such resins cannot be used in traditional RPM processes as the volatiles produce off gasses that result in bubbling or other imperfections in the composite component. Volatiles may include anything that produces an off gassing from the resin such as benzene, hexane, solvents, and/or materials that convert to gas at room temperature. Other materials, such as water/moisture, may produce off gassing at high temperatures used in the curing process. In various embodiments, the volatiles within the resin may begin off gassing before prepreg part 104 is placed in mold 102. In various embodiments, the volatiles within the resin may produce additional off gassing in response to the resin being heated within mold 102. As will be discussed in more detail below, the resin has a first viscosity and the off gasses have a second viscosity that is generally lower than the first viscosity.

Permeable media 106 is formed around an outer edge perimeter of prepreg part 104. Permeable media 106 may be designed to restrict the flow of the resin while permitting the flow of the volatiles so that the volatiles exit prepreg part 104 and the resin stays mostly in prepreg part 104. As such, mold 102 is sized to accommodate prepreg part 104 and permeable media 106. In various embodiments, permeable media 106 may include a low permeable material, such as a low permeable breather, including high density fiber glass with a fiber volume dependent on the viscosity of the resin system used or a chromatography column for low viscous (or liquid) resin. In various embodiments, the high density fiber glass may have a fiber volume of about 60% to about 90%, and more specifically, about 70% to about 80%. In various embodiments, permeable media 106 may include cement, ceramic, foam, wood, or cork, among other porous materials. Permeable media 106 extends a length L from the outer edge perimeter of prepreg part 104. Length L varies depending on multiple variables including the flow the resin, the flow of the gasses escaping the resin in prepreg part 104, the cross-sectional area of permeable media 106, and the pressure drop across permeable media 106, among others. In various embodiments, length L may be about 0.5 inches to about 10 inches, depending design and process variables. In various embodiments, Darcy's law may be used to determine the type and size of material to use for permeable media 106. Darcy's law is $q = -\frac{k}{\mu} \nabla p$ where $q$ is the instantaneous flow rate, $k$ is the permeability of permeable media 106, $\mu$ is the dynamic viscosity of the fluid, and $\nabla p$ is the pressure drop across permeable media 106. Darcy's law may be applied based on the flow rate of the resin or based on the flow rate of the volatiles escaping from the resin.

First conduit 108 and second conduit 110 allow air to be removed from or introduced into mold 102. In various embodiments, after closing mold 102, a vacuum is applied to mold 102 via first conduit 108 and second conduit 110. The vacuum creates a pressure drop across prepreg part 104 and permeable media 106. The vacuum allows forces the volatiles, and associated off gasses and, the resin to flow through prepreg part 104 and into permeable media 106 with the resin having a first flow rate and the volatiles having a second flow rate that is generally greater than the first flow rate. However, based on Darcy's law, as described above, permeable media 106 is designed to restrict the flow of the resin and reducing the first flow rate to trap the resin in permeable media 106 while allowing the volatiles to pass through permeable media 106 with little to no reduction in the second flow rate.

In various embodiments, mold 102 may be heated, resulting in a decrease in the viscosity of the resin and therefore an increase in the first flow rate. The heat may further cause an increase in the rate of volatilization of volatiles, and associated off gasses. The heating process allows for volatiles to exit prepreg part 104 and the resin prior to the curing process, resulting in a more complete elimination of volatiles and other outgassing materials.

After the volatiles, or substantially all volatiles, and air are removed from prepreg part 104, the vacuum is removed and compressed air is introduced to mold 102 through first conduit 108 and second conduit 110. The compressed air pressurizes prepreg part 104 within mold 102. Prepreg part 104 then cures under the hydrostatic pressure from the compressed air, similar to the autoclave process but without the autoclave.

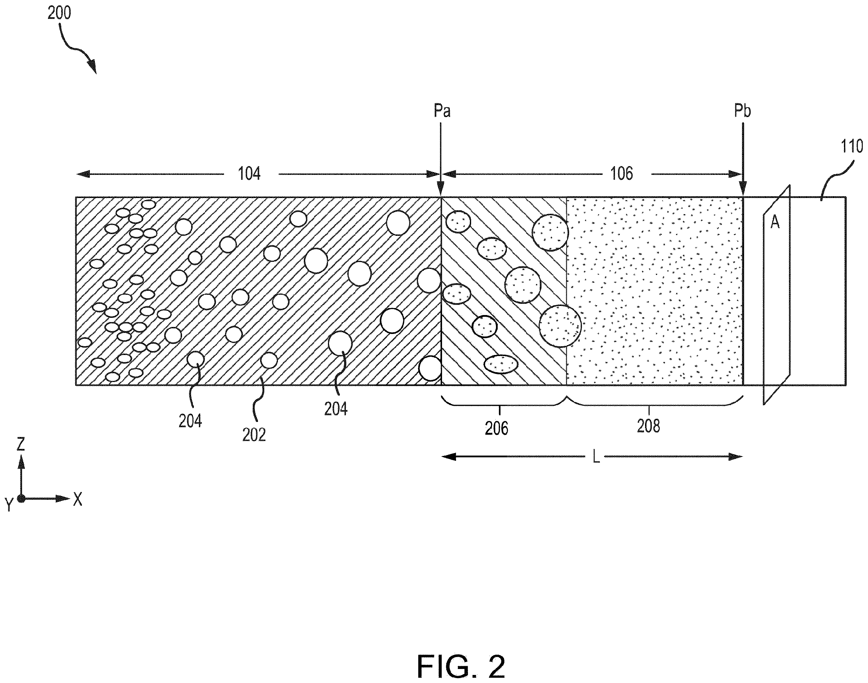

Referring now to FIG. 2, a side view of a cross section of a portion 200 of system 100 during the RPM process is illustrated, in accordance with various embodiments. Portion 200 includes prepreg part 104 and permeable media 106 having a cross sectional area A. Prepreg part 104 includes a resin 202 and a plurality of volatiles 204, as described above with respect to system 100 in FIGS. 1A and 1B. Permeable media 106 has length L and includes a first portion 206 and a second portion 208. Permeable media 106 is designed to restrict the flow of resin 202 while permitting the flow of volatiles 204 (e.g., along the x-axis). As illustrated, resin 202 and volatiles 204 flow through prepreg part 104 and into first portion 206 of permeable media 106 and volatiles 204 flow through first portion 206 and into second portion 208 of permeable media 106. Thus, resin 202 stays mostly in prepreg part 104 while volatiles 204 escape prepreg part 104 allowing the composite component to cure properly.

A pressure drop occurs across length L of permeable media 106 in response to a vacuum being applied to mold 102. Accordingly, there is a first pressure Pa at the junction of prepreg part 104 and permeable media 106 and a second pressure Pb at the junction of permeable media 106 and second conduit 110. In response to the vacuum being applied, first pressure Pa is higher than second pressure Pb, causing the pressure drop and forcing resin 202 and volatiles 204 to flow (e.g., in the positive x-axis) in the direction of the pressure drop.

After volatiles 204, in liquid form, vapor form, or a combination of both, have exited prepreg part 104, the vacuum may be removed and compressed air may be introduced to mold 102 through second conduit 110, as illustrated in FIG. 2. The compressed air causes the pressure differential across permeable media 106 to reverse so that first pressure Pa is lower than second pressure Pb. This pressure differential, in various embodiments, may force resin 202 back into prepreg part 104. Prepreg part 104 may then be cured with little to no loss of resin 202. In various embodiments, prepreg part 104 may be cured under a desired hydrostatic pressure produced by compressed air. In various embodiments, pressurized nitrogen, or other non-reactive gasses, may be used to eliminate the presence of oxygen, moisture, and other potential contaminants common in compressed air. In various embodiments, additional resin 202 may be introduced to prepreg part 104 during different stages of this process.

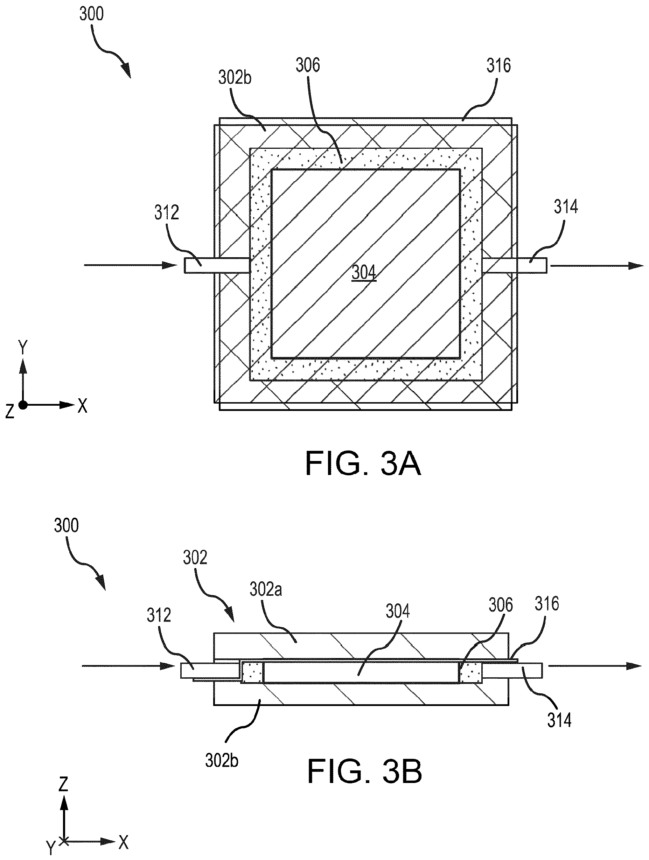

Referring now to FIGS. 3A and 3B, a system 300 for manufacturing a composite part using a resin pressurized molding (RPM) process is illustrated, in accordance with various embodiments. System 300 may be used to manufacture the composite part without the use of an autoclave. System 300 includes similar components to those described above with respect to system 100 in FIGS. 1A and 1B, including a mold 302, a prepreg part 304, and a permeable media 306, descriptions of which may not be repeated below. System 300 further includes an inlet 312, an outlet 314, and a pressurized film 316. Pressurized film 316 is placed under (e.g., in the negative z-direction) inlet 312 and over (e.g., in the positive z-direction) prepreg part 304, permeable media 306, and outlet 314. Compressed air may be introduced to mold 302 through inlet 312 while at the same time a vacuum is pulled on outlet 314 so that a higher pressure can be applied to prepreg part 304 than is possible by a vacuum alone. In various embodiments, the vacuum may be maintained for continuous volatile removal during the curing process.

Pressurized film 316 is an isolation film between the inlet 312 and the outlet 314. Pressurized film may be a bagging film, a non-stick or release film such as Fluorinated ethylene propylene (FEP), a thin caul sheet, or a thin elastomer rubber sheet, among others. System 300 may be used with various types of resins (e.g., PRM-15 resins and phenolic resins) that continue releasing volatiles and off gasses during the curing process. Pressurized film 316 allows for the volatiles to continue to flow out prepreg part 304 and through permeable media 306 during the curing process.

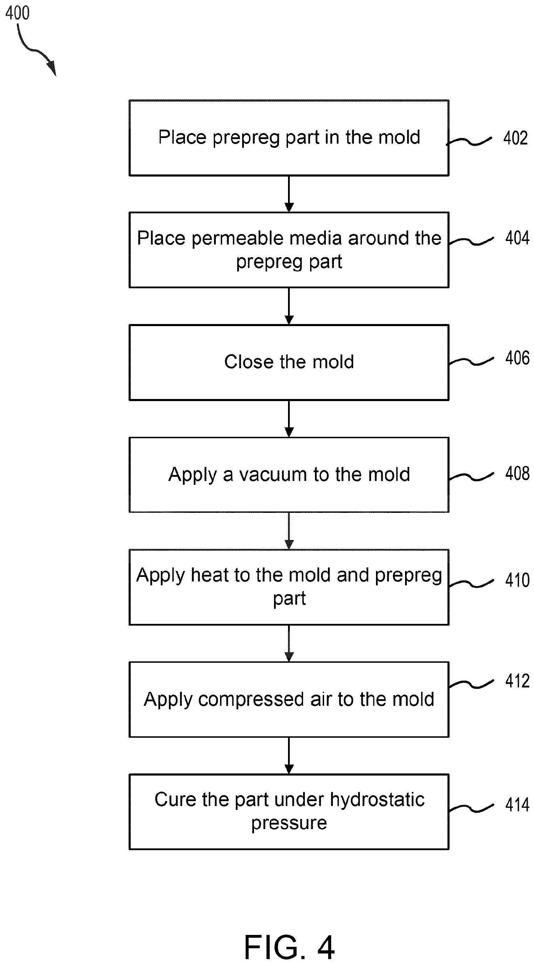

Referring now to FIG. 4, a flow diagram for a method 400 of performing the resin pressurized molding (RPM) process is illustrated, in accordance with various embodiments. In various embodiments, method 400 may be performed by system 100 described above in FIGS. 1A and 1B. In various embodiments, method 400 may include more or fewer steps than are described herein.

At block 402, a pre-impregnated (prepreg) part (e.g., prepreg part 104) is placed in a mold (e.g., mold 102). At block 404, a permeable media (e.g., permeable media 106) is placed around prepreg part 104. At block 406, mold 102 is closed. At block 408, a vacuum is applied to mold 102 to extract volatiles from prepreg part 104. The vacuum causes the volatiles to leave prepreg part 104 through permeable media 106. At block 410, heat is applied to mold 102 and prepreg part 104. In various embodiments, the vacuum is maintained in order to continue extracting volatiles from prepreg part 104 while volatiles remain in prepreg part 104. At block 412, compressed air is applied to the mold 102. In various embodiments, the compressed air forces resin back into prepreg part 104 from permeable media 106. At block 414, prepreg part 104 is cured under hydrostatic pressure to create the composite component. In various embodiments, additional resin may be added to mold 102 in the form of a resin film placed over prepreg part 104 or by increasing the amount of resin in prepreg part 104 above what is normally used.

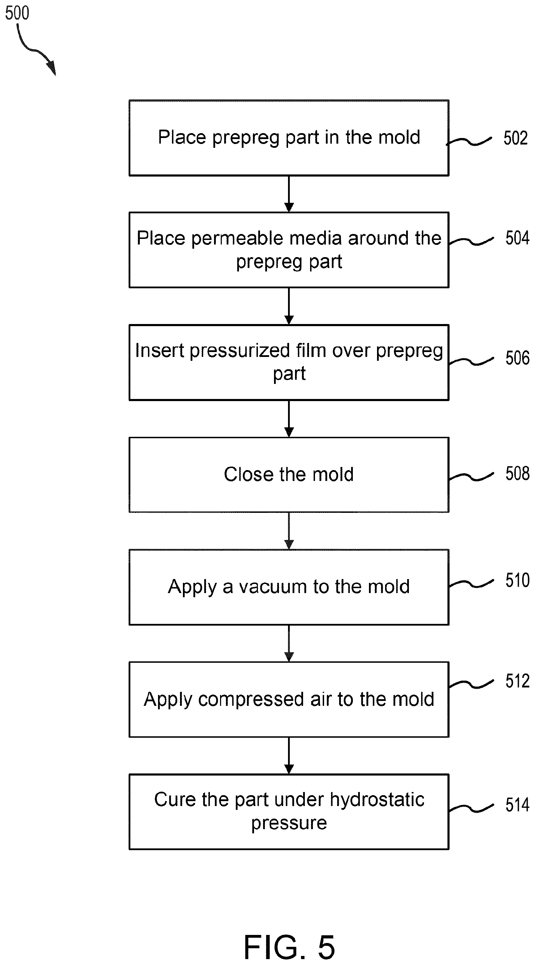

Referring now to FIG. 5, a flow diagram for a method 500 of performing the resin pressurized molding (RPM) process is illustrated, in accordance with various embodiments. In various embodiments, method 500 may be performed by system 300 described above in FIGS. 3A and 3B.

At block 502, a pre-impregnated (prepreg) part (e.g., prepreg part 104) is placed in a mold (e.g., mold 102). At block 504, a permeable media (e.g., permeable media 106) is placed around prepreg part 104. At block 506, a pressurized film 316 is placed over prepreg part 104. At block 508, mold 102 is closed. At block 510, a vacuum is applied to mold 102 to extract volatiles from prepreg part 104. The vacuum causes the volatiles to leave prepreg part 104 through permeable media 106. At block 512, compressed air is applied to the mold 102 at the same time as the vacuum is applied. In this arrangement, the compressed air applies pressure to prepreg part 104 while the vacuum draws the volatiles out of prepreg part 104 and through permeable media 106. In various embodiments, the compressed air may be applied to mold 102 prior to applying the vacuum to mold 102. At block 514, prepreg part 104 is cured under hydrostatic pressure to create the composite component. In various embodiments, additional resin may be added to mold 102 in the form of a resin film placed over prepreg part 104 or by increasing the amount of resin in prepreg part 104 above what is normally used.

In various embodiments, method 400 may be performed by a controller. The controller may comprise one or more processors configured to implement various logical operations in response to execution of instructions, for example, instructions stored on a non-transitory, tangible, computer-readable medium. The one or more processors can be a general purpose processor, a microprocessor, a microcontroller, a digital signal processor (DSP), an application specific integrated circuit (ASIC), a field programmable gate array (FPGA) or other programmable logic device, discrete or transistor logic, discrete hardware components, or any combination thereof. The controller may further comprise memory to store data, executable instructions, system program instructions, and/or controller instructions to implement the control logic of the controller.

System program instructions and/or controller instructions may be loaded onto a non-transitory, tangible computer-readable medium having instructions stored thereon that, in response to execution by a controller, cause the controller to perform various operations. The term "non-transitory" is to be understood to remove only propagating transitory signals per se from the claim scope and does not relinquish rights to all standard computer-readable media that are not only propagating transitory signals per se.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods, and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Numbers, percentages, or other values stated herein are intended to include that value, and also other values that are about or approximately equal to the stated value, as would be appreciated by one of ordinary skill in the art encompassed by various embodiments of the present disclosure. A stated value should therefore be interpreted broadly enough to encompass values that are at least close enough to the stated value to perform a desired function or achieve a desired result. The stated values include at least the variation to be expected in a suitable industrial process, and may include values that are within 5% of a stated value. Additionally, the terms "substantially," "about" or "approximately" as used herein represent an amount close to the stated amount that still performs a desired function or achieves a desired result. For example, the term "substantially," "about" or "approximately" may refer to an amount that is within 5% of a stated amount or value.

Furthermore, no element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above-described concepts can be used alone or in combination with any or all of the other above-described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

## Claims

1. A system, comprising:

   a mold defining an interior space and having a conduit through the mold and into the interior space;
   a prepreg part configured to fit in the interior space; and
   a permeable media configured to fit in the interior space and around the prepreg part, wherein a vacuum is applied to the interior space through the conduit to extract volatiles from the prepreg part, through the permeable media, and out the conduit.

2. The system of claim 1, wherein the prepreg part includes a plurality of fibers and a resin, the plurality of fibers being impregnated by the resin.

3. The system of claim 2, wherein the plurality of fibers include at least one of a carbon fiber, a fiber glass, or a polyaramid fiber, and/or wherein the resin includes a bismaleimide (BMI), a thermoplastic, a liquid rubbers, an epoxy resin, a phenolic resin, or a polymer.

4. The system of claim 2 or 3, wherein the resin has a first flow rate through the permeable media in response to the vacuum and the volatiles have a second flow rate through the permeable media in response to the vacuum, the second flow rate being greater than the first flow rate.

5. The system of any preceding claim, wherein the mold is further configured to heat the interior space including the prepreg part while the vacuum is applied to the interior space.

6. The system of any preceding claim, further comprising:

a compress air source configured to wherein the mold is further configured to apply compressed air to the interior space through the conduit to apply hydrostatic pressure to the prepreg part during a curing process of the prepreg part.

7. The system of any preceding claim, further comprising:

an inlet configured to provide compressed air to the interior space while the conduit applies the vacuum; and
a pressure film disposed between the inlet and the prepreg part and the pressure film disposed between a top portion of the mold and the prepreg part, and/or further comprising
a resin source coupled to the mold, the resin source configured to inject resin into the prepreg part before performing a curing process.

8. The system of any preceding claim, wherein the permeable media includes a high density fiber, a cement, a ceramic, a foam, a wood, or a cork.

9. A method, comprising:

placing a prepreg part into a mold;
placing a permeable media in the mold and around the prepreg part; and
applying a vacuum to the mold, causing volatiles in vapor form to exit the prepreg part and the mold through the permeable media.

10. The method of claim 9, further comprising:

applying heat to the mold and the prepreg part, the heat causing additional volatiles to flow through the permeable media.

11. The method of claim 10, further comprising:

removing the vacuum from the mold; and
applying compressed air to the mold and the prepreg part, generating a hydrostatic pressure in the prepreg part.

12. The method of claim 11, further comprising:

removing the heat from the mold; and
curing the prepreg part under the hydrostatic pressure and/or further comprising:
introducing additional resin to the prepreg part using a resin film or oversaturating the prepreg part before placing the prepreg part in the mold.

13. The method of any of claims 9 to 12, wherein the prepreg part includes a plurality of fibers and a resin, the plurality of fibers being impregnated by the resin.

14. The method of claim 13, wherein the plurality of fibers include at least one of a carbon fiber, a fiber glass, or a polyaramid fiber, and/or wherein the resin includes a thermoset, a thermoplastic, an elastomer rubber, a bismaleimide (BMI), a thermoplastic, a liquid rubbers, an epoxy resin, a phenolic resin, or a polymer, and/or wherein the resin has a first flow rate through the permeable media in response to the vacuum and the volatiles has a second flow rate through the permeable media in response to the vacuum, the second flow rate being greater than the first flow rate

15. The method of any of claims 9 to 14, wherein the permeable media includes a high density fiber glass, a chromatography column, a cement, a ceramic, a foam, a wood, or a cork.

FIG. 1A

FIG. 1B

FIG. 2

300

302b        306                    316

312                                            314

304

Y
Z        X

# FIG. 3A

300

302

312        302a                    304        306   316

302b        FIG. 3B

Z

Y        X

400

Place prepreg part in the mold — 402

↓

Place permeable media around the prepreg part — 404

↓

Close the mold — 406

↓

Apply a vacuum to the mold — 408

↓

Apply heat to the mold and prepreg part — 410

↓

Apply compressed air to the mold — 412

↓

Cure the part under hydrostatic pressure — 414

FIG. 4

500

Place prepreg part in the mold — 502

Place permeable media around the prepreg part — 504

Insert pressurized film over prepreg part — 506

Close the mold — 508

Apply a vacuum to the mold — 510

Apply compressed air to the mold — 512

Cure the part under hydrostatic pressure — 514

FIG. 5

Europäisches
Patentamt

European
Patent Office

Office européen
des brevets

**EUROPEAN SEARCH REPORT**

Application Number

EP 24 17 8058

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 709 893 A (MCCARVILLE DOUGLAS A [US] ET AL) 20 January 1998 (1998-01-20) * col. 4 lines 59-63, col. 5 lines 44-46, col. 6 lines 39-48, col.7 lines 9-32,40-47,58-67; claim 10; figure 3 * ----- | 1-5,8-15 | INV. B29C70/44 B29C70/34 B29C70/08 B29C70/48 B29C43/12 B29C37/00 B29C43/36 |
| X | EP 2 190 650 B1 (INVISION CONSULTANTS LLC [US]) 18 January 2017 (2017-01-18) | 1-6, 8-10,13, 14 | |
| A | * paragraphs [0014], [0016], [0017], [0019], [0023], [0024]; claims 1,7,8; figures 1a,3 * ----- | 7 | |
| X | EP 0 028 637 B1 (ROCKWELL INTERNATIONAL CORP [US]) 23 October 1985 (1985-10-23)  * col. 4 lines 10-25, col. 7 lines 44-52,col. 8 lines 8-28; claims 1,5; figure 6; table 1 * ----- | 1-5, 8-10, 13-15 | |
| X | US 2013/099427 A1 (LLOPART PRIETO LLORENC [DE] ET AL) 25 April 2013 (2013-04-25) * paragraphs [0034], [0048], [0055], [0066]; claim 1; figures 1,2 * ----- | 1-5,9, 10,13,14 | **TECHNICAL FIELDS SEARCHED (IPC)** B29C |

The present search report has been drawn up for all claims

| Place of search | Date of completion of the search | Examiner |
|---|---|---|
| The Hague | 30 September 2024 | Traiforos, Neoklis |

EPO FORM 1503 03.82 (P04C01)

## ANNEX TO THE EUROPEAN SEARCH REPORT
## ON EUROPEAN PATENT APPLICATION NO.

EP 24 17 8058

This annex lists the patent family members relating to the patent documents cited in the above-mentioned European search report.
The members are as contained in the European Patent Office EDP file on
The European Patent Office is in no way liable for these particulars which are merely given for the purpose of information.

30-09-2024

| Patent document cited in search report | | Publication date | Patent family member(s) | | Publication date |
|---|---|---|---|---|---|
| US 5709893 | A | 20-01-1998 | US | 5709893 A | 20-01-1998 |
| | | | US | 6861017 B1 | 01-03-2005 |
| EP 2190650 | B1 | 18-01-2017 | CN | 102083616 A | 01-06-2011 |
| | | | EP | 2190650 A1 | 02-06-2010 |
| | | | ES | 2622417 T3 | 06-07-2017 |
| | | | US | 2009041972 A1 | 12-02-2009 |
| | | | WO | 2009020466 A1 | 12-02-2009 |
| EP 0028637 | B1 | 23-10-1985 | BE | 883380 A | 15-09-1980 |
| | | | CA | 1146457 A | 17-05-1983 |
| | | | EP | 0028637 A1 | 20-05-1981 |
| | | | GB | 2062542 A | 28-05-1981 |
| | | | IT | 1143094 B | 22-10-1986 |
| | | | JP | S649923 B2 | 20-02-1989 |
| | | | JP | S56500530 A | 23-04-1981 |
| | | | SE | 429419 B | 05-09-1983 |
| | | | US | 4357193 A | 02-11-1982 |
| | | | WO | 8002528 A1 | 27-11-1980 |
| US 2013099427 | A1 | 25-04-2013 | BR | 112012025922 A2 | 28-06-2016 |
| | | | CA | 2795861 A1 | 13-10-2011 |
| | | | CN | 103068560 A | 24-04-2013 |
| | | | DE | 102010014545 A1 | 13-10-2011 |
| | | | EP | 2558279 A1 | 20-02-2013 |
| | | | ES | 2519350 T3 | 06-11-2014 |
| | | | KR | 20130056239 A | 29-05-2013 |
| | | | RU | 2012147702 A | 20-05-2014 |
| | | | US | 2013099427 A1 | 25-04-2013 |
| | | | WO | 2011124216 A1 | 13-10-2011 |

EPO FORM P0459

For more details about this annex : see Official Journal of the European Patent Office, No. 12/82